# EUROPEAN PATENT APPLICATION

(11) **EP 1 505 558 A2**
(43) Date of publication of application: **09.02.2005**
(21) Application number: 04026783.3
(22) Date of filing: 11.01.2002
(51) Int. Cl.: G09F 3/02, G09F 3/04

(54) **Cavitated labels for use with cold glue**

(30) Priority: 26.01.2001 US 770960
(62) Divisional of application: 02707441.8
(71) Applicant: ExxonMobil Oil Corporation, Baytown, TX 77522 (US)
(72) Inventor: Perez, Karen B., Pittsford New York 14534 (US); Squier, Jo Ann H., Bloomfield New York 14469 (US)
(74) Representative: Dew, Melvyn John

(57) **Abstract**

A thermoplastic label comprising a first skin layer, comprising a thermoplastic and a first cavitating agent, wherein the first skin layer has a first side and a second side, and the first skin layer is cavitated, wherein the first side of the first skin layer is adapted to be used in contact with a cold glue adhesive.

## Description

### BACKGROUND OF THE INVENTION

### Field of the Invention

This invention relates to labels generally, and more specifically but without limitation to die cut or patch labels for use with cold glue, and to films for making such labels. In one aspect the invention relates to the use of such labels on substrates, where the label forms a destruct bond with the substrate such that the label delaminates. In another aspect, the invention relates to such labels which possess the beneficial properties of the known thermoplastic labels, but which exhibit improved initial adhesion and destruct bonding such as delamination.

### Description of the Prior Art

In many label applications, it is desirable that the label stock from which the labels are cut be a film of polymeric material rather than paper. Polymeric film can provide one or more of the following properties lacking in paper, such as durability, strength, water resistance, curl resistance, abrasion resistance, gloss, transparency and other properties. Obviously, the polymeric material must meet the practical requirements of commercial manufacture and use. Material costs must be competitive. The film must be formable by a suitable commercial process such as cast film extrusion or blown film extrusion, requiring that the molten film material be flowable to the correct degree to accomplish proper film formation. The formed film must be capable of hot-stretching without deleterious effect, since it is generally advantageous to hot-stretch and anneal the formed film, so as to orient the film and impart a stiffness to the film that is different in machine and cross directions. The film must have a printable face and be die-cuttable and matrix-strippable when used in a pressure-sensitive label construction.

In the die cut, cold glue label applications, there are certain other desired characteristics. Cold glues are widely used as an economical alternative to wrap around or pressure sensitive labels. Cold glue labels must be capable of providing a means for drying the adhesive and providing good initial adhesion, while not exhibiting visual defects.

Olefin blends have been found in many respects to be a preferred material to meet the demands of polymeric die-cut label manufacture. The relatively low cost of the olefinic resins, and their high strength allowing for low caliper film, tend to minimize overall material cost. Hot-stretched polypropylene and/or polyethylene provides stiffness in the machine direction even at relatively low-caliper thicknesses for adequate print registration and dispensing while providing sufficiently low tensile modulus and particularly sufficiently high elongation in the cross direction to allow good conformability.

Olefin blends have been found useful to produce, on an economical basis, printable 3.5 mil (caliper measured) coextruded labels die-cut from biaxially hot-stretched film that are durable, strong and water-resistant, and that generally have good structural and surface properties and performance characteristics. Biaxial stretching also makes an important contribution to performance by creating substantial differentials between machine direction (MD) and cross direction (CD) stiffnesses, tensile moduli, elongations, and other properties.

Paper labels have been used in the art in conjunction with a cold glue adhesive for application to glass and plastic containers. The paper labels exhibit good initial adhesion, adhesive drying, and destruct bonds.

U.S. Patent No. 4,060,168 discloses a label assembly that includes a strip or web of backing material with a series of printed labels arranged in serial order. The backing material includes a die cut portion opposed to the label, which remains adhered to the label upon application of the label to a container. The cut portion may include printing and serves as a promotional item with improved pilfer resistance. U.S. Patent No. 4,060,168 is incorporated herein by reference.

U.S. Patent No. 5,061,334 discloses a high speed labeling machine and method for transferring labels to articles such as cans. The labeling machine includes a device for supplying articles to be labeled, a label transfer wheel provided with individual groups of closely spaced vacuum holddown ports to enable a succession of closely spaced labels to be supported by the transfer wheel and carried by the transfer wheel to the articles, and a pressure severing device for releasing the label from a carrier stock for subsequent transfer from a transfer wheel to the article to be labeled. Sprocket holes are utilized to align very precisely a label; such labels may be die cut on the printing press and retained on the carrier by pinpoint attachments or they may be die cut as the label is advanced. In one particular embodiment, single layer label tapes with release agent on one surface and a pressure sensitive adhesive on the other surface provide added advantages of smaller spool sizes and faster speeds. Single layer label tapes also make tamper-evident packaging very versatile and advantageous. Another aspect disclosed in this patent is the significantly improved economics by reducing the number of layers to one instead of two for normal pressure sensitive labels as well as by eliminating the cost and problems associated with using glue applicators with many types of labeling products. U.S. Patent No. 5,061,334 is incorporated herein by reference.

U.S. Patent No. 5,174,852 discloses a method for attaching labels to containers where the labels are removed from a stack by rolling contact with an adhesive surface coated with a cold glue. Additionally, prior to termination of the removing step, localized hot glue coating is applied to the foremost label in the stack. After the label has thus been coated with cold glue and hot glue, it is peeled off the adhesive surface and pressed into contact of its glue-coated backside with a container. The provision that the hot glue coating is applied to the label while it is still held in the magazine ensures that the shape and position of the hot glue coating is fully independent of the speed of the labeling operation. U.S. Patent No. 5,174,852 is incorporated herein by reference.

U.S. Patent No. 5,288,548 discloses a multilayer label stock structure comprising a label stock of polypropylene film having on one side thereof a highly printable blend of (A) alkaline acrylate copolymer and (B) an interpolymer of an alkyl acrylate, an alkyl methacrylate and an alkyl acrylate acid. U.S. Patent No. 5,288,548 is incorporated herein by reference.

U.S. Patent No. 5,486,253 discloses a method of labeling containers utilizing a labeler having a multiple port vacuum drum. The multiple port vacuum drum has a first cavity which is supplied with one level of vacuum suitable for picking up label segments from a cutter with limited tension. The vacuum drum has a second cavity, which is supplied with another, higher level of vacuum suitable for firmly griping the label segments as an adhesive or the like is applied to the label segment. The second cavity may be further divided into a label application segment with lower vacuum pressure. The cutter drum has an arcuate cavity to which vacuum is supplied at the end first contacting the labeling material web with reduced vacuum being provided at the label cut off point and label release point. U.S. Patent No. 5,486,253 is incorporated herein by reference.

U.S. Patent No. 5,897,722 discloses a process for applying labels to articles by first adhering a limited portion of the label to the article and subsequently making additional portions of the label adhesive so that they will adhere to the article after the label is affixed to the article. The leading and trailing edges of the label may be bonded to the article or each other to affix the label to a container or other such article. The portions of the label between the leading and trailing edges may be either provided with an adhesive agent that is in a non-adhesive state or be formed from a label material which is not normally adhesive but can be rendered adhesive through an additional process step. For example, coated polyethylene film can be applied to a container by means of a hot melt adhesive and then subsequently heated to a temperature at which the polyethylene material becomes adhesive causing it to stick to the container. Other labeling materials can be printed with an adhesive that remains substantially non-adhesive until heated or activated by means of radiation, application of a chemical activating agent or by application of mechanical force. U.S. Patent No. 5,897,722 is incorporated herein by reference.

U.S. Patent No. 6,083,342 discloses a system and method for rapidly labeling a blow-molded hollow container made of a plastic composition subject to out-gassing after de-molding. Otherwise, conventional high speed silk screen labeling technology and processing is employed shortly after container fabrication de-molding in order to accurately deposit a continuous liquid layer of conventional silk screen ink over an external container surface area designated for application thereon of a self-adhering pre-printed label. The label is rapidly and accurately transfer applied over the silk screen coated area immediately after the same has dried, and even while out-gassing is still occurring from the de-molded to container. However, the protective ink barrier coating prevents formation of bubbles beneath the label. Those gases in the container wall resident beneath the label-affixed area can then nevertheless out-gas by migrating out of the container internal wall surface. Also, labeling may be silk screen imprinted on the container surface in a designated label-receiving area, and/or on non-designated surface area concurrently with barrier coating of the designated area. A gas-blocking clear ink barrier layer may be silk screened over the silk screen imprinting, and then the label applied over the gas-blocking layer of clear ink when dry. The label may be "peelable" for customer rebate return without thereby altering the labeling information remaining on the container. The pre-printed label may be a replicate of the label-covered imprinting so that the "trade dress" need not be altered by the peelable label, and so that the container surface area available for permanent labeling is maximized. U.S. Patent No. 6,083,342 is incorporated herein by reference.

U.S. Patent No. 6,139,935 discloses an oxygen-absorbing label consisting of a base sheet, adhesive on the base sheet for securing the base sheet to an internal surface of a container, an oxygen-absorbing composition on the base sheet, and a cover sheet secured to the base sheet to confine the oxygen-absorbing composition there between. The cover sheet being fabricated of material which will permit oxygen to pass there through but will not stain due to the oxidation of the oxygen-absorbing composition or due to contact with materials in the container. A plurality of the foregoing labels are mounted on a web to be used with conventional labeling equipment. U.S. Patent No. 6,139,935 is incorporated herein by reference.

### SUMMARY OF THE INVENTION

One embodiment of this invention is a thermoplastic label comprising a first skin layer comprising polypropylene or polyethylene and a first cavitating agent wherein the first skin layer has a first side and a second side and the first skin layer is cavitated.

Another embodiment of this invention is a thermoplastic label adapted to be applied to a container comprising a first skin layer comprising polypropylene or polyethylene and a first cavitating agent having a first side and a second side, wherein the first skin layer is cavitated and a cold glue is applied to the first side of the first skin layer.

Another embodiment of this invention is a container having a thermoplastic label comprising a surface of the container; a cold glue adjacent to the surface; a label comprising a first skin layer comprising polypropylene or polyethylene and a first cavitating agent wherein the first skin layer has a first side and a second side, wherein the first skin layer is cavitated and the first side is adjacent to the cold glue.

Advantages of the thermoplastic label include one or more of the following:
1. A label that can be used with cold glue.
2. A label that exhibits good initial adhesion when used with a cold glue.
3. A label that exhibits destruct bonds when used with a cold glue.
4. A label that exhibits delamination when used with a cold glue.
5. A label that is an economical alternative to wrap around or pressure sensitive labels.
6. A label that exhibits the properties of durability, strength, water resistance, abrasion resistance, gloss, transparency and/or other properties.

### BRIEF DESCRIPTION OF THE DRAWINGS

FIG. 1 is a cross-sectional view of a thermoplastic label constructed in accordance with the present invention and comprising a first skin layer as previously described.
FIG. 2 is a cross-sectional view of the thermoplastic label of FIG. 1, with a core layer added.
FIG. 3 is a cross-sectional view of the thermoplastic label of FIG. 2, with a cold glue applied to the first skin layer.
FIG. 4 is a cross-sectional view of the label shown in FIG. 3, as attached to a container.

### DETAILED DESCRIPTION OF THE DRAWINGS

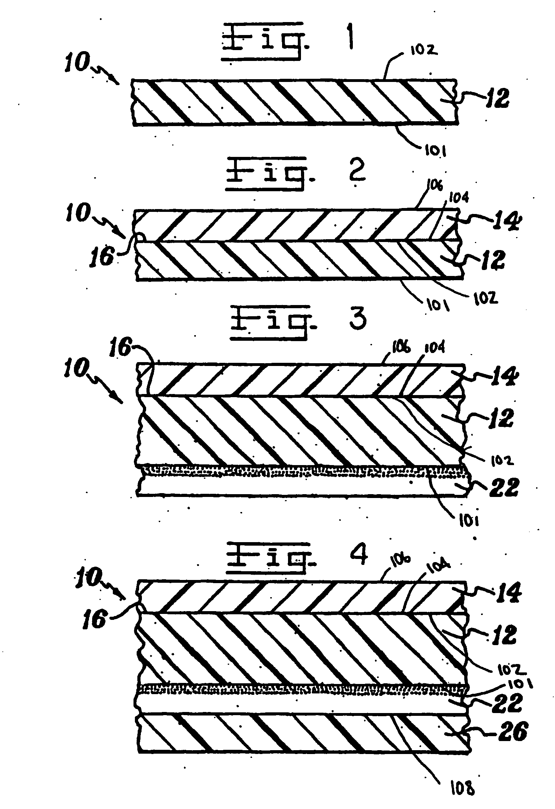

Referring now to the accompanying figures 1-4, the present invention is illustrated in its various aspects.

Referring first to figure 1 depicts a thermoplastic label 10 which consists of a first skin layer 12 consisting of polypropylene or polyethylene and a first cavitating agent having a first side 101 and a second side 102 where the first skin layer 12 is cavitated.

In one embodiment the polypropylene of the first skin layer 12 is a homopolymer polypropylene. Suitable polypropylenes can include a standard film grade isotactic polypropylene or a high crystalline polypropylene.

In another embodiment the polyethylene of the first skin layer 12 is a high density polyethylene.

In another embodiment the first cavitating agent is calcium carbonate comprising 25 percent or more by weight of the first skin layer. In another embodiment the calcium carbonate comprises 35 percent or more by weight of the first skin layer. In another embodiment the calcium carbonate comprises 50 percent or more by weight of the first skin layer.

In another embodiment the first side 101 of the first skin layer 12 has holes formed by the cavitating agent. In another embodiment, the median particle size of the cavitating agent is 1.4 microns. In another embodiment, the median particle size of the cavitating agent is 3.2 microns. In another embodiment, the median particle size of the cavitating agent is at least about 1.4 microns. In another embodiment the median particle size of the cavitating agent is at least about 3.2 microns.

Possible first cavitating agents include polyamides, polybutylene terephthalate, polyesters, acetals, acrylic resins, nylons, solid preformed glass spheres, hollow preformed glass spheres, metal beads, metal spheres, ceramic spheres, calcium carbonate, and mixtures thereof.

In one embodiment the label 10 has thickness from about 1 mil. to about 10 mils. In another embodiment, the label 10 has thickness from about 3 mils. to about 5 mils. In another embodiment, the label 10 is uniaxially oriented In another embodiment, the label 10 is biaxially oriented.

In one embodiment the first skin layer 12 of the thermoplastic label 10 comprises at least about 15 percent by weight of the thermoplastic label 10. In another embodiment the first skin layer 12 comprises at least about 30 percent by weight of the thermoplastic label 10.

Referring now to figure 2 is a cross sectional view of the thermoplastic label 10 of figure 1 with a core layer 14 added. The thermoplastic label 10 has a first skin layer 12 having a first side 101 and a second side 102 a core layer 14 having a first side 104 and a second side 106 and an interface 16 between the first skin layer 12 and the core layer 14 where the interface is the connection of the second side 102 of the first skin layer 12 and the first side 104 of the core layer 14.

In one embodiment the core layer 14 comprises polypropylene and a second cavitating agent. The second cavitating agent can be one of the following: polyamides, polybutylene terephthalate, polyesters, acetals, acrylic resins, solid preformed glass spheres, hollow preformed glass spheres, metal beads, metal spheres, ceramic spheres, calcium carbonate, COC's, and mixtures thereof. COC's (cyclic olefin polymers and cyclic olefin copolymers) are described in U.S. Patent No. 6,048,608 issued to Peet, et al; this patent is incorporated herein by reference in its entirety. In another embodiment the core layer 14 is not cavitated. In another embodiment, the polypropylene of the core layer 14 is either isotactic or high crystalline polypropylene.

In one embodiment the core layer 14 comprises polyethylene and a second cavitating agent. The second cavitating agent maybe one of the following: polyamides, polybutylene terephthalate, polyesters, acetals, acrylic resins, solid preformed glass spheres, hollow preformed glass spheres, metal beads, metal spheres, ceramic spheres, calcium carbonate, COC's, and mixtures thereof. In another embodiment the core layer 14 is not cavitated. In another embodiment, the polyethylene of the core layer 14 is high-density polyethylene.

In another embodiment a second skin layer (not shown) is added to the thermoplastic label 10 that is adjacent to the core layer 14 and is adjacent to the second side 106 of the core layer 14. In one embodiment, the second skin layer (not shown) comprises any polyolefin. Suitable polyolefins for the second skin layer include polyethylene, polypropylene, polybutylene, polyolefin copolymers, and mixtures thereof.

In another embodiment a primer is added to the second skin layer (not shown). In another embodiment, the second skin layer (not shown) has a metal or coating layer applied. U.S. Patents 6,077,602; 6,013,353; 5,981,079; 5,972,496; 6,074,762; 6,025,059; and 5,888,648 disclose the use of coatings and/or metal layers on a film, and are incorporated herein by reference. In one embodiment, suitable coatings may include PVdC's or acrylics which serve to boost gloss, enhance machineability, and / or enhance ink adhesion; suitable metals may include aluminum.

Referring now to figure 3 is a cross sectional view of the thermoplastic label 10 of figure 2 with a cold glue 22 applied to the first side 101 of the first skin layer 12. Cold glues generally consist of solid base materials in combination with water. In one embodiment, the cold glue 22 is an aqueous solution of a natural adhesive (e.g. casein). In another embodiment, the cold glue 22 is an aqueous solution of a resin (e.g. PVA, EVA). Cold glues are widely used as an economical alternative to wrap around or pressure sensitive labels. Some cold glues are a colloidal suspension of various proteinaceous materials in water and are derived by boiling animal hides, tendons, or bones which are high in collagen. Alternatively, a cold glue can be derived from vegetables (e.g. starch, dextrin). Some cold glue are based on synthetic materials (resins). (Suitable cold glues include HB Fuller WB 5020, National Starch Cycloflex 14-200A, AABBITT 712-150, and Henkel 10-7026; the aforementioned list of cold glues are trademarks of HB Fuller, National Starch, AABBITT, and Henkel respectively.)

Referring now to figure 4 is a cross sectional view of the label 10 shown in figure 3 as attached to a container 26.

The container 26 has a surface 108 which is adjacent to the glue 22 applied to the first side 101 of the first skin layer 12 of the label 10. Suitable materials for the container 26 include glass, ceramics, thermoplastics, or other materials.

In another embodiment a conventional filler and pigment such as titanium dioxide may be added to the core layer 14 and may be desirable for printing or graphic reproduction purposes. Generally, from an economic viewpoint at least, it has not been considered to be of any particular advantage to use more than about 10 percent by weight of titanium dioxide to achieve a white label suitable for printing. Greater amounts could be added for greater opacity so long as there is no undue interference with achieving the desired properties of the thermoplastic label 10.

The label 10 can be transparent or opaque. In one embodiment the label 10 is white opaque. For the opaque version, this provides an excellent contrasting background for printed material applied to the second side 106 of the core layer 14 or to the surface (not shown) of the second skin layer (not shown) of the label 10. In one embodiment is a transparent polypropylene core layer 14 which has a coextruded first skin layer 12 and second skin layer (not shown). Another embodiment has a metal coating applied to the second skin layer (not shown).

Another embodiment has a core layer 14 comprising an opaque core material that is an oriented polypropylene structure cavitated in a special way so as to produce a pearlescent opaque appearance. A material of this type is described in U.S. Patent No. 4,377,616 issued to Ashcraft, et al; this patent is incorporated herein by reference in its entirety. In accordance with this patent, the process of preparing the opaque film structure is as follows: a major proportion of a first thermoplastic material, example polypropylene, is mixed with a minor proportion of second material of a higher melting point or of a higher glass transition temperature than the first material. This mixture is heated to a temperature of at least above the melting point of the first material. Thereafter, the second material is uniformly dispersed throughout the molten first material in the form of microspheres. The microspheres can be conveniently prepared in a master batch of, e.g. polybutylene terephthalate, micro dispersed in molten form in molten polypropylene. This combination is then coextruded with a first skin layer 12 and a second skin layer (not shown) so as to have two skin layers on opposite surfaces of the core 14 comprising a combination of the materials. In one embodiment, thereafter, this arrangement is biaxially oriented at a temperature and to a degree to form a strata of opacifying closed cell voids of dimensions X, Y and Z. Dimensions X and Y are major dimensions and dimension Z is a minor dimension at least generally corresponding to the diameter of the microspheres. In another embodiment, this arrangement is uniaxially oriented at a temperature and to a degree to form a strata of opacifying closed cells voids of dimensions X, Y, and Z. Dimension Z is major dimension and dimensions Y and Z are minor dimensions at least generally corresponding to the diameter of the microspheres. In some cases, it may be advantageous to include inorganic filler materials therein, for example, to promote the roughness of the surface of the skin.

Another embodiment has a core layer 14 comprising an opaque core material that is an oriented polypropylene structure that is cavitated by using COC's (cyclic olefin polymers and cyclic olefin copolymers). COC's are described in U.S. Patent No. 6,048,608 issued to Peet, et al; this patent is incorporated herein by reference in its entirety.

Another embodiment has a core layer 14 comprising an opaque core material that is a polyethylene structure that contains calcium carbonate.

Another embodiment of the thermoplastic label 10 has a tie layer (not shown) adjacent to the second side 102 of the first skin layer 12 and also adjacent to the first side 104 of the core layer 14. The tie layer (not shown) is between the first skin layer 12 and the core layer 14 in the interface 16. In another embodiment the tie layer (not shown) is a mixture of the materials of the first skin layer 12 and the core layer 14.

In another embodiment, the first skin layer 12 can delaminate from the thermoplastic label 10. In one embodiment, when the label 10 is removed from the container 26, the first skin layer 12 of the label 10 and the glue 22 remain attached to the container 26. This means that the first skin layer 12 has delaminated from the adjacent layers of the label 10.

It should be evident that this disclosure is by way of example, and that various changes can be made by adding, modifying, or eliminating details without departing from the fair scope of the teaching contained in the disclosure. The invention therefore is not limited to particular details of this disclosure except to the extent that the claims that follow are necessarily are so limited.

### DEFINITION OF TERMS

1. Acetals - A polymer or copolymer obtained by polymerization of formaldehyde and CH₂, and possibly other compounds
2. Acrylic Resins - A polymer or copolymer of acrylic acid, methacrylic acid, esters of these acids, or acrylonitrile
3. Biaxially Oriented - stretched in the machine direction, the direction of the feed, and in the transverse direction, perpendicular to the feed
4. Calcium Carbonate - Same as aragonite, oyster shells, calcite, chalk, limestone, or marble. (Chemical formula is CaCO₃.)
5. Cavitated - Formation of gas chambers in a layer of a film after being subjected to tension
6. Cavitating Agent - A material that is incompatible with the base material of a film material and has a higher melting point or glass transition temperature
7. Ceramic Spheres - A small sphere produced predominately from silicates
8. Coating - A layer applied to an outside surface of the film
9. Cold Glue - Adhesives used for container labeling and in particular water based adhesives, which consist of the solids base material (e.g. starch, PVA, latex, etc) in combination with water. Can be protein derived, vegetable, mineral, or synthetic.
10. Comprising - Made up of at least the named components (can also include other unnamed components)
11. Container - Any vessel constructed of glass, plastics, or ceramics
12. Film - A thin material from about 10 to about 100 microns thick
13. Glass Spheres - A small sphere produced predominately from silica, soda ash, and lime
14. Homopolymer Polypropylene - A high polymer derived from the single monomer propylene
15. HCPP - highly crystalline homopolymer polypropylene.
16. Metal Beads - A small rounded piece of metal
17. Metal Spheres - A small sphere of metal
18. Nylons - A material selected from the family of polyamide polymers characterized by the presence of the amide group -CONH
19. Polyamides - A polymer in which amide linkages (-CONH-) occur along the polymer chain
20. Polybutylene Terephthalate - A thermoplastic polymer derived from 1,4-butanediol
21. Polyesters - A polycondensation product of dicarboxylic acids with dihydroxy alcohols
22. Polypropylene - A polymer of propylene
23. Thermoplastic - A high polymer that softens when exposed to heat and returns to its original condition when cooled to room temperature
24. Thermoplastic Label - a label designed to be used on the outside of a package
25. Thickness - a caliper thickness reading
26. Uniaxially Oriented - stretched in only one direction, either machine, in the direction of the feed, or in the transverse direction, in the direction perpendicular to the feed direction
27. Initial adhesion - when a label does not move from its applied desired position under stress (by pushing with hand or from stress applied for example by a bottling line), immediately after application
28. Tack up - another term for initial adhesion
29. Delamination - internal separation of a plastic film. Usually, separation of layers within a coextruded plastic film.
30. Fiber tear - when a paper label exhibits destruct bonds with a substrate.

Loosely used in conjunction with plastic labels to mean delamination.

### EXAMPLES

### DATA AND RELATED INFORMATION

The following structures were produced. The thickness of the structures was about 2 mils, and the thickness of the cavitated skin layer was about 0.3 mils.

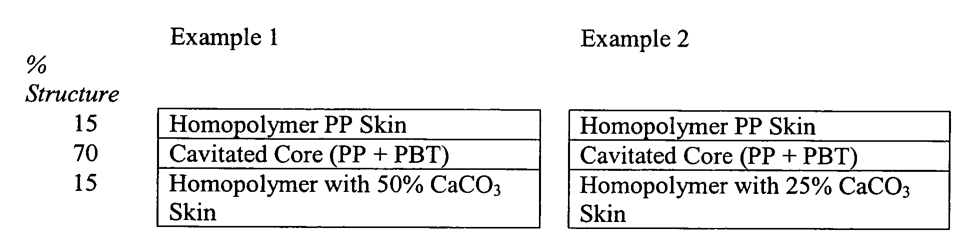

Examples 1 & 2: These structures were adhered to a glass container with a water-based cold glue. The structure in example 1 exhibited good initial tack up and fiber tear (delamination) after just 1 hour aging. A test was developed to measure the initial tack up which consisted of applying the label to the container with a cold glue and attempting to manually slide the label across the container. If the label was able to lock into position, then it exhibited good initial tack up, if the label was able to slide easily over the container, then it exhibited poor initial tack up. The structure in example 2 did not exhibit fiber tear, even after 24 hours. A visual test was developed to measure fiber tear. A label was applied with cold glue and cured for two weeks in a cold room at 38° F. After the two week period, the label was peeled off the container and it was determined how much of the label delaminated and remained on the container with the cold glue. If more than 50% of the label delaminated and remained on the container, then the label exhibited good fiber tear, if less than 50% of the label remained on the container, then the label exhibited poor fiber tear. In general, fiber tear indicates good tack up, which is a very important property. In these examples, the CaCO₃ used had a median particle size of 1.4 microns. The PP was Exxon 4612, the PBT was Ticona 1300A, and the CaCO₃ was Omyacarb FT; the aforementioned list of materials are trademarks of ExxonMobil, Ticona, and Omyacarb, respectively. SEM pictures of the two structures show that the structure in example 1 was highly cavitated, with many layers and good separation between layers, and that the surface of the film had "holes". It is hypothesized that the "holes" allow the water to enter the cavitated skin, aiding the drying of the adhesive. It is further hypothesized that the "holes" create an anchor spot for the adhesive. The structure in example 2 is not very cavitated and the surface does not have any holes.

Example 3: The structure in example 1 was reproduced, except that the PP skin with 50% CaCO₃ was replaced with a HDPE skin with 50% CaCO₃ (Schulman FCA-6080-HD with blend of Equistar M6060, the aforementioned materials are trademarks). This structure failed to exhibit fiber tear. SEM pictures show no cavitation or "holes" on the surface, probably because the process temperatures required to orient the PP were beyond the melting point of the HDPE. This indicates that the cavitation, and not just the presence of an absorbant material, is required. This sample used a CaCO₃ with a median particle size of 3.2 microns.

Several additional structures were produced. The skin composition and results are shown below. In all cases, a homopolymer PP layer was on the other surface of the core.

| Example | Skin | Intermediate Layer | Core | Results |
|---|---|---|---|---|
| 4 | Homopolymer PP with 25% CaCO₃ (∼30% of structure) | NA | Cavitated Core (PP + PBT) | Good initial adhesion. Fiber tear. |
| 5 | Homopolymer PP with 35% CaCO₃ (∼30% of structure) | NA | Cavitated Core (PP + PBT) | Good initial adhesion. Fiber tear. |
| 6 | HDPE (3-5% of structure) | Homopolymer PP with 35% CaCO₃ (∼30% of structure) | Cavitated Core (PP + PBT) | Did not adhere as well. No fiber tear. |
| 7 | Homopolymer PP with 35% CaCO₃ (∼30% of structure) | NA | Homopolym er PP with 25% CaCO₃ | Good initial adhesion. Fiber tear. |

Example 6 shows that it is necessary to have the layer adjacent to the adhesive be cavitated. The similar performance of examples 5 and 7 show that the choice of cavitating agent for the core is not critical. Interestingly, the same loading of CaCO₃ (25%) that had failed in example 2 in the first test worked in example 4 with the same loading of CaCO₃ (25%) and a thicker skin thickness. This indicates that the total amount of cavitator (loading * skin thickness) is important and that the larger size of the cavitating particles may be important. In these cases, the CaCO₃ used had a median particle size of about 2 microns. The PP was Exxon 4612, the PBT was Ticona 1300A, and Ampacet's Pearl 70 was the CaCO₃ masterbatch; the aforementioned list of materials are trademarks of ExxonMobil, Ticona, and Ampacet, respectively.

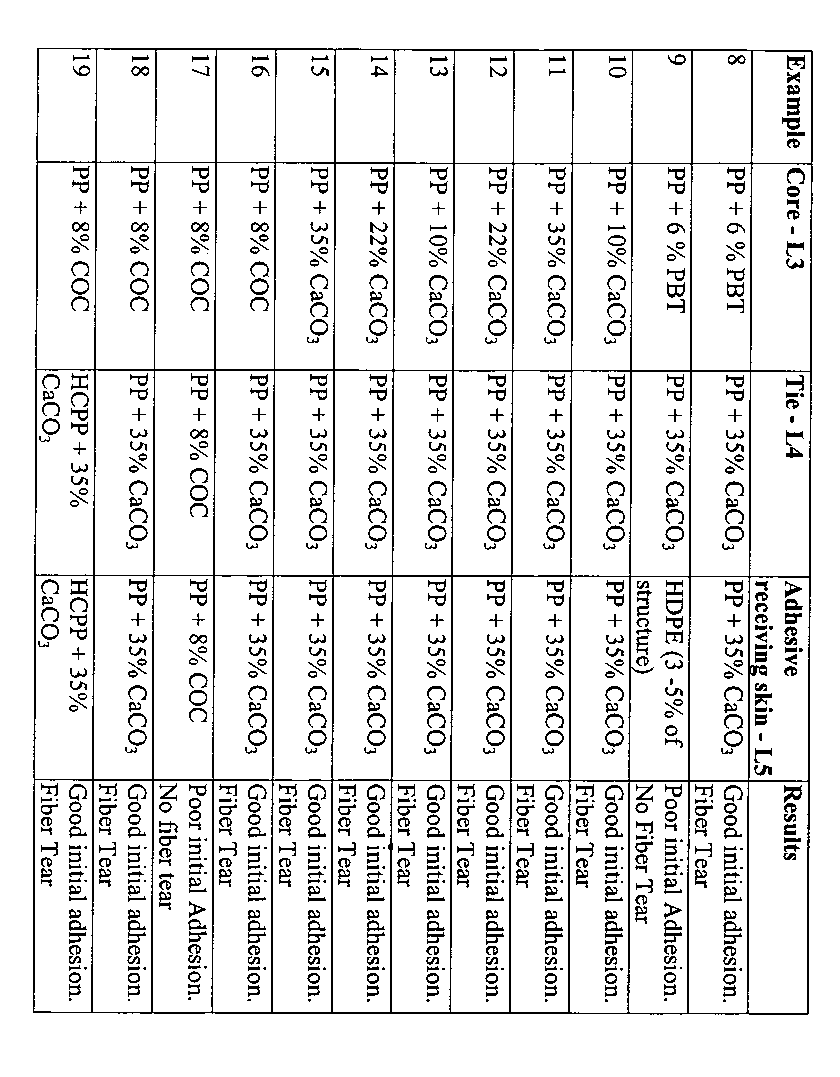

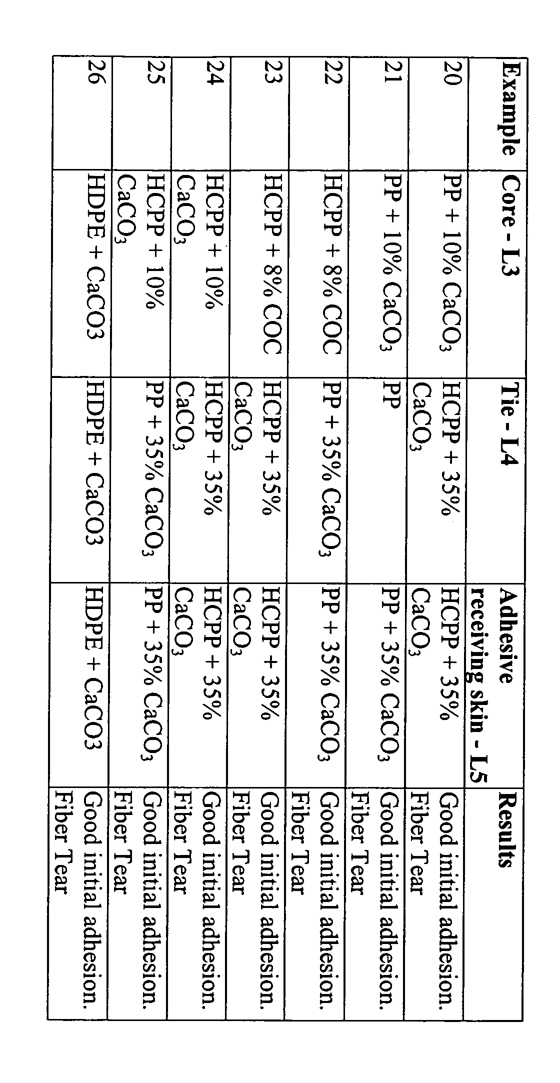

- The PP was Exxon 4612 or Fina 3371. The HCPP was Amoco 9117. The PBT was Ticona 1300A. The COC was Ticona Topas 6017. Ampacet's Pearl 70 was the PP-CaCO3 masterbatch. The HDPE was Exxon 7845, the HDPE-CaCO3 masterbatch was Ampacet M-6211; the aforementioned materials are trademarks of ExxonMobil, Fina, BP Amoco, Ticona, Ampacet, ExxonMobil, and Ampacet, respectively.
- For the PP based structures, all print skins (L1) are PP, or co- or terpolymers of PP (i.e. EP copolymer, EPB terpolymer), and all tie layers (L2) are a homopolymer PP. The print and tie layers are not shown in the example, but identified as L1 and L2.
- For the PE based structure, the print skin (L1) and the tie layer (L2) are PE. The print and tie layers are not shown in the example, but identified as L1 and L2.
- Core (L3), tie (L4), and adhesive receiving layers (L5) are cavitated.

## Claims

1. A thermoplastic label for use with a cold glue adhesive comprising:
an opaque core layer having a first and second side;
a first skin layer adjacent to the first side of the core layer and comprising a thermoplastic and a cavitating agent wherein the first skin layer has a first side and a second side, and the first skin layer is cavitated wherein the first side of the first skin layer is adapted to be used in contact with a cold glue adhesive, wherein the first cavitating agent comprises at least 35% by weight of the first skin layer, wherein the thermoplastic is polypropylene and wherein the first skin layer comprises at least 15% by weight of the thermoplastic label;
a second skin layer adjacent to the second side of the core layer; and,
a coating or metal layer on the second skin layer.

2. The thermoplastic label according to claim 1 wherein the first skin layer comprises at least 30% by weight of the thermoplastic label.

3. The thermoplastic label according to any of the previous claims further comprising a cold glue adhesive on the first side of the first skin layer.

4. The thermoplastic label according to any of the previous claims wherein the core layer comprises polyethylene or polypropylene.

5. The thermoplastic label according to any of the previous claims wherein the second skin layer comprises a polyolefin.

6. The thermoplastic label according to claim 5 wherein the second skin layer comprises a polyolefin selected from polyethylene, polypropylene, polybutylene, polyolefin copolymers and mixtures thereof.

7. The thermoplastic label according to any of the previous claims further comprising a tie layer having a first side and a second side and the first side of the tie layer is adjacent to the second side of the first skin layer and the second side of the tie layer is adjacent to the core layer.

8. The thermoplastic label according to claim 7 wherein the tie layer comprises polypropylene.

9. The thermoplastic label according to claims 7 or 8 wherein the tie layer has a thickness of at least 7.6 microns (0.3 mil).

10. The thermoplastic label according to any of the previous claims wherein the core layer comprises a cavitating agent.

11. The thermoplastic label according to any of the previous claims wherein the cavitating agent of the core layer and/or first skin layer is selected from the group consisting of polyamides, polybutylene terephthalate, polyesters, acetals, acrylic resins, nylons, solid preformed glass spheres, hollow preformed glass spheres, metal beads, metal spheres, ceramic spheres, calcium carbonate, cyclic olefin polymers, cyclic olefin copolymers, and mixtures thereof.

12. The thermoplastic label of claim 11 wherein the first cavitating agent and/or second cavitating agent comprises calcium carbonate.

13. The thermoplastic label according to any of the previous claims wherein the label is biaxially oriented.

14. The thermoplastic label according to any of the previous claims wherein the first cavitating agent comprises at least 50% by weight of the first skin layer.

15. The thermoplastic label according to any of the previous claims wherein the thermoplastic of the first skin layer is polypropylene comprising polypropylene homopolymer.

16. The thermoplastic label according to any of the previous claims wherein the label is white opaque.

17. A process comprising: providing a label according to any of the previous claims, applying a cold glue adhesive to the first side of the cavitated first skin layer, and applying the label to a container.

18. A process comprising providing a label according to any of claims 3-16 and applying the label to the container.

19. An article of manufacture comprising the label according to any of claims 1-16.

20. The use of a label according to any of claims 1-16 with a cold glue adhesive to apply the thermoplastic label to a container.

21. The process according to claims 17 or 18, the article according to claim 19, or use according to claim 20 wherein the container is a vessel constructed of glass, plastic, or ceramic.
